# EUROPEAN PATENT APPLICATION

(11) **EP 4 440 195 A1**
(43) Date of publication of application: **02.10.2024**
(21) Application number: 24157404.5
(22) Date of filing: 13.02.2024
(51) Int. Cl.: H04W 36/00, H04W 36/36

(54) **METHODS, APPARATUSES AND SYSTEMS FOR PSCELL MEASUREMENT ACTIVATION DURING NR-DC**

(30) Priority: 29.03.2023 IN 202341023081
(71) Applicant: Nokia Technologies Oy, 02610 Espoo (FI)
(72) Inventor: GANESHAN, Rathi, Bengaluru (IN); KARABULUT, Umur, Munich (DE); GÜRSU, Halit Murat, München (DE); SELVAGANAPATHY, Srinivasan, Bangalore (IN); STANCZAK, Jedrzej, Wroclaw (PL)
(74) Representative: Nokia EPO representatives

(57) **Abstract**

Described herein is a source network element configured for supporting a conditional mobility procedure in a dual connectivity (DC) setup involving at least one target network element and a user equipment, UE, served by a first primary cell (PCell) of the source network element, the target network element being associated with a second PCell and a plurality of primary secondary cells (PSCells) for supporting a conditional PSCell addition and change (CPAC) procedure, the source network element comprising: at least one processor; and at least one memory storing instructions that, when executed by the at least one processor, cause the source network element at least to: receive, from the target network element, respective CPAC condition configurations for the plurality of PSCells; obtain condition information indicative of at least one criterion for one or more beams associated with respective PSCells, wherein the at least one criterion is for facilitating determination of at least one PSCell that is associated with a beam fulfilling the criterion from the plurality of PSCells; and transmit the CPAC condition configurations and the condition information indicative of the criterion to the UE for evaluation of the respective CPAC condition of the at least one PSCell.

## Description

### TECHNOLOGY

The present disclosure generally relates to handover procedures, and particularly relates to methods, apparatuses, and systems for supporting measurements during (conditional) handover procedures in an NR-DC (New Radio-Dual Connectivity) setup.

### BACKGROUND

Any discussion of the background art throughout the specification should in no way be considered as an admission that such art is widely known or forms part of common general knowledge in the field.

CHO (Conditional Handover) procedure has been introduced in the 3rd Generation Partnership Project (3GPP) Release 16 to improve mobility robustness. Generally speaking, in the case of CHO, the network may prepare multiple target cells where each conditional handover reconfiguration is associated with a CHO execution condition that would be evaluated by the UE. The CHO execution condition generally refers to a measurement ID associating a measurement object with a reporting configuration and is typically configured by the source base station (e.g., a gNB or the like). The reporting configuration generally defines the measurement event (e.g., A3 or A5 or the like) which would trigger the reporting of the configured measurements. The same measurement events are also configured by the serving UE which will trigger the CHO execution upon the configured measurement configuration is met. Whenever CHO execution condition is met, the corresponding target configuration may be selected, and handover would be executed towards the selected target cell.

In Release 16, another procedure referred to as CPC (Conditional PSCell (Primary Secondary Cell) Change) has also been specified, but mainly for intra-SN (Secondary Node) scenarios. Later, CPC has been extended in Release 17 for inter-SN scenarios where it generally has two flavors, namely: MN (Master Node)-initiated CPC and SN-initiated CPC.

Some further enhancements proposed for the mobility work item in Release 18 also mentioned the following objectives, including specifying CHO including target MCG (Master Cell Group) and candidate SCG(s) (Secondary Cell Group) for CPC/CPA (Conditional PSCell Addition) in NR-DC. Sometimes, CPC/CPA may also be referred to as CPAC (Conditional PSCell Addition and Change).

In the case of CHO in NR-DC, the target MN would generally provide CHO preparation for PCell (Primary Cell) along with CPAC preparation for PSCells. The UE would then evaluate the CPAC conditions for all PSCells that are configured by the network.

Conventionally, there may exist two possible options to configure CHO for PCell with CPAC for target PSCells. Broadly speaking, in a first option, there may be multiple CHO preparations for the same PCell, with each CHO preparation including a respective (e.g., different) CPAC preparation (i.e., different PSCell preparations); whilst in a second option, there may be a single CHO preparation for the PCell, including multiple CPAC preparations for different PSCells.

However, it may be understood that, in either option above, the UE would need to evaluate all the CPAC conditions but might eventually execute the CPAC towards only one PSCell. The rest of the CPAC condition evaluations for the other PSCells would then go in vain which would lead to higher UE processing and power consumption.

Therefore, in view of at least some or all of the issues discussed above, there appears to exist a need to propose new mechanisms/techniques for use in supporting (selective) PSCell measurement activation (and/or deactivation) in NR-DC, particularly in an efficient, flexible yet reliable manner. Specifically, there appears to exist a need to propose new mechanisms/techniques such that the UE may start evaluating the CPAC execution conditions of the PSCells that are most likely to be executed to avoid too much processing on the UE and in turn saves power consumption setup.

### SUMMARY

In accordance with an aspect of the present disclosure, there is provided a source network element configured for supporting a conditional mobility procedure in a dual connectivity (DC) setup involving at least one target network element and a user equipment (UE) served by a first primary cell (PCell) of the source network element, the target network element being associated with a second PCell and a plurality of primary secondary cells (PSCells) for supporting a conditional PSCell addition and change (CPAC) procedure, and the source network element comprising:
at least one processor; and
at least one memory storing instructions that, when executed by the at least one processor, cause the source network element at least to:
   receive, from the target network element, respective CPAC condition configurations for the plurality of PSCells;
   obtain condition information indicative of at least one criterion for one or more beams associated with respective PSCells, wherein the at least one criterion is for facilitating determination of at least one PSCell that is associated with a beam fulfilling the criterion from the plurality of PSCells; and
   transmit the CPAC condition configurations and the condition information indicative of the criterion to the UE for evaluation of the respective CPAC condition of the at least one PSCell.

In some examples, the source network element being caused to obtain the condition information indicative of the at least one criterion involves:
receiving, from the target network element, the condition information indicative of the at least one criterion.

In some examples, the source network element being caused to obtain the condition information indicative of the at least one criterion involves:
determining, by the source network element, the condition information indicative of the at least one criterion.

In some examples, the one or more beams are associated with the first PCell; and
the source network element is further caused to, before receiving the condition information indicative of the at least one criterion from the target network element:
transmit, to the target network element, information indicative of mapping of the plurality of PSCells of the target network element associated with the one or more beams of the first PCell.

In some examples, the one or more beams are associated with the second PCell; and
the source network element is further caused to, before determining the condition information indicative of the at least one criterion:
   receive, from the target network element, information indicative of mapping of the plurality of PSCells of the target network element associated with the one or more beams of the second PCell; and
the condition information indicative of the at least one criterion is determined by the source network element based on the received information indicative of the mapping of the plurality of PSCells of the target network element associated with the one or more beams of the second PCell.

In some examples, the at least one criterion comprises at least one of:
whether a beam is a serving beam,
whether a measurement measure of a beam is larger than a predetermined threshold, or
whether a beam has the largest measurement measure among a predetermined list of beams.

In accordance with another aspect of the present disclosure, there is provided a target network element configured for supporting a conditional mobility procedure in a dual connectivity (DC) setup involving a user equipment (UE) served by a first primary cell (PCell) of a source network element, the target network element being associated with a second PCell and a plurality of primary secondary cells (PSCells) for supporting a conditional PSCell addition and change (CPAC) procedure, and the target network element comprising:
at least one processor; and
at least one memory storing instructions that, when executed by the at least one processor, cause the target network element at least to:
   determine condition information indicative of at least one criterion for one or more beams associated with respective PSCells, wherein the at least one criterion is for facilitating determination of at least one PSCell that is associated with a beam fulfilling the criterion from the plurality of PSCells; and
   transmit the condition information indicative of the at least one criterion and respective CPAC condition configurations for the plurality of PSCells to the source network element.

In some examples, the one or more beams are associated with the first PCell;
the target network element is further caused to, before determining the condition information indicative of the at least one criterion:
   receive, from the source network element, information indicative of mapping of the plurality of PSCells of the target network element associated with the one or more beams of the first PCell; and
the condition information indicative of the at least one criterion is determined by the target network element based on the received information indicative of the mapping of the plurality of PSCells of the target network element associated with the one or more beams of the first PCell.

In accordance with yet another aspect of the present disclosure, there is provided a target network element configured for supporting a conditional mobility procedure in a dual connectivity (DC) setup involving a user equipment (UE) served by a first primary cell (PCell) of a source network element, the target network element being associated with a second PCell and a plurality of primary secondary cells (PSCells) for supporting a conditional PSCell addition and change (CPAC) procedure, and the target network element comprising:
at least one processor; and
at least one memory storing instructions that, when executed by the at least one processor, cause the target network element at least to:
   transmit, to the source network element, information indicative of mapping of the plurality of PSCells of the target network element associated with the one or more beams of the second PCell, for enabling the source network element to determine condition information indicative of at least one criterion for one or more beams associated with respective PSCells, wherein the at least one criterion is for facilitating determination of at least one PSCells that is associated with a beam fulfilling the criterion from the plurality of PSCells.

In accordance with yet another aspect of the present disclosure, there is provided a user equipment (UE) configured for supporting a conditional mobility procedure in a dual connectivity (DC) setup involving a source network element and at least one target network element, the source network element being associated with a first primary cell (PCell) serving the UE, the target network element being associated with a second PCell and a plurality of primary secondary cells (PSCells) for supporting a conditional PSCell addition and change (CPAC) procedure, and the UE comprising:
at least one processor; and
at least one memory storing instructions that, when executed by the at least one processor, cause the UE at least to:
   receive, from the source network element, respective CPAC condition configurations for the plurality of PSCells and condition information indicative of at least one criterion for one or more beams associated with respective PSCells;
   determine, based on received condition information, at least one PSCell associated with a beam that fulfills the criterion; and
   evaluate the respective CPAC condition of the determined at least one PSCell.

In some examples, the UE is further caused to:
receive, from the source network element, a conditional handover (CHO) configuration for the second PCell; and
evaluate, based on the received CHO configuration, for executing the conditional mobility procedure.

In accordance with yet another aspect of the present disclosure, there is provided a method of a source network element configured for supporting a conditional mobility procedure in a dual connectivity (DC) setup involving at least one target network element and a user equipment (UE) served by a first primary cell (PCell) of the source network element, the target network element being associated with a second PCell and a plurality of primary secondary cells (PSCells) for supporting a conditional PSCell addition and change (CPAC) procedure, the method comprising:
receiving, from the target network element, respective CPAC condition configurations for the plurality of PSCells;
obtaining condition information indicative of at least one criterion for one or more beams associated with respective PSCells, wherein the at least one criterion is for facilitating determination of at least one PSCell that is associated with a beam fulfilling the criterion from the plurality of PSCells; and
transmitting the CPAC condition configurations and the condition information indicative of the criterion to the UE for evaluation of the respective CPAC condition of the at least one PSCell.

In accordance with yet another aspect of the present disclosure, there is provided a method of a target network element configured for supporting a conditional mobility procedure in a dual connectivity (DC) setup involving a user equipment (UE) served by a first primary cell (PCell) of a source network element, the target network element being associated with a second PCell and a plurality of primary secondary cells (PSCells) for supporting a conditional PSCell addition and change (CPAC) procedure, the method comprising:
determining condition information indicative of at least one criterion for one or more beams associated with respective PSCells, wherein the at least one criterion is for facilitating determination of at least one PSCell that is associated with a beam fulfilling the criterion from the plurality of PSCells; and
transmitting the condition information indicative of the criterion and respective CPAC condition configurations for the plurality of PSCells to the source network element.

In accordance with yet another aspect of the present disclosure, there is provided a method of a target network element configured for supporting a conditional mobility procedure in a dual connectivity (DC) setup involving a user equipment (UE) served by a first primary cell (PCell) of a source network element, the target network element being associated with a second PCell and a plurality of primary secondary cells (PSCells) for supporting a conditional PSCell addition and change (CPAC) procedure, the method comprising:
transmitting, to the source network element, information indicative of mapping of the plurality of PSCells of the target network element associated with the one or more beams of the second PCell, for enabling the source network element to determine condition information indicative of at least one criterion for one or more beams associated with respective PSCells, wherein the at least one criterion is for facilitating determination of at least one PSCells that is associated with a beam fulfilling the criterion from the plurality of PSCells.

In accordance with yet another aspect of the present disclosure, there is provided a method of a user equipment (UE) configured for supporting a conditional mobility procedure in a dual connectivity (DC) setup involving a source network element and at least one target network element, the source network element being associated with a first primary cell (PCell) serving the UE, the target network element being associated with a second PCell and a plurality of primary secondary cells (PSCells) for supporting a conditional PSCell addition and change (CPAC) procedure, the method comprising:
receiving, from the source network element, respective CPAC condition configurations for the plurality of PSCells and condition information indicative of at least one criterion for one or more beams associated with respective PSCells;
determining, based on received condition information, at least one PSCell associated with a beam that fulfills the criterion; and
evaluating the respective CPAC condition of the determined at least one PSCell.

In accordance with yet another aspect of the present disclosure, there is provided a computer program comprising instructions for causing an apparatus to perform the method as disclosed in the present disclosure.

In accordance with a further aspect of the present disclosure, there is also provided a memory storing computer readable instructions for causing an apparatus to perform the method as disclosed in the present disclosure.

Furthermore, according to some example embodiments, there is provided a source network element configured for supporting a conditional mobility procedure in a dual connectivity (DC) setup involving at least one target network element and a user equipment (UE) served by a first primary cell (PCell) of the source network element, the target network element being associated with a second PCell and a plurality of primary secondary cells (PSCells) for supporting a conditional PSCell addition and change (CPAC) procedure, and the source network element comprising respective suitable means configured for performing the respective steps as disclosed in the present disclosure.

Similarly, according to some example embodiments, there is also provided a target network element configured for supporting a conditional mobility procedure in a dual connectivity (DC) setup involving a user equipment (UE) served by a first primary cell (PCell) of a source network element, the target network element being associated with a second PCell and a plurality of primary secondary cells (PSCells) for supporting a conditional PSCell addition and change (CPAC) procedure, and the target network element comprising respective suitable means configured for performing the respective steps as disclosed in the present disclosure.

Moreover, according to some example embodiments, there is also provided a user equipment (UE) configured for supporting a conditional mobility procedure in a dual connectivity (DC) setup involving a source network element and at least one target network element, the source network element being associated with a first primary cell (PCell) serving the UE, the target network element being associated with a second PCell and a plurality of primary secondary cells (PSCells) for supporting a conditional PSCell addition and change (CPAC) procedure, and the UE comprising respective suitable means configured for performing the respective steps as disclosed in the present disclosure.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses (or systems) according to the above example embodiments and variations thereof, and that respective statements made with regard to the apparatuses (or systems) likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example option to configure the CHO for PCell with CPAC for target PSCells,
Figure 2 schematically illustrates another example to configure the CHO for PCell with CPAC for target PSCells,
Figure 3 schematically shows an example diagram illustrating an exemplary source PCell beam based implementation according to some example embodiments of the present disclosure,
Figure 4 schematically shows an example diagram illustrating an exemplary target PCell beam based implementation according to some example embodiments of the present disclosure,
Figure 5 schematically illustrates an example of a CPAC evaluation signaling/messaging flowchart according to some examples of the present disclosure,
Figure 6 schematically illustrates another example of a CPAC evaluation signaling/messaging flowchart according to some examples of the present disclosure,
Figure 7 schematically illustrates yet another example of a CPAC evaluation signaling/messaging flowchart according to some examples of the present disclosure,
Figure 8 schematically illustrates a further example of a CPAC evaluation signaling/messaging flowchart according to some examples of the present disclosure, and
Figure 9 schematically illustrates an example of an implementation of an apparatus according to some example embodiments of the present disclosure.

### DESCRIPTION OF EXAMPLE EMBODIMENTS

Notably, identical or like reference numbers used in the figures of the present disclosure may, unless indicated otherwise, indicate identical or like elements. Similarly, identical or like messages (as well as the contents comprised therein) used in the figures of the present disclosure may, unless indicated otherwise, indicate identical or like messages (and the contents therein), such that repeated description thereof may be omitted for reasons of conciseness.

In the following, different exemplifying embodiments will be described using, as an example of a communication network to which examples of embodiments may be applied, a communication network architecture based on 3GPP standards for a communication network, such as a 5G/NR/IoT, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   ∘ The function split in this option is similar to the 1A architecture in DC. RRC is in the central unit. PDCP, RLC, MAC, physical layer and RF are in the distributed unit.
Option 2 (3C-like split):
   ∘ The function split in this option is similar to the 3C architecture in DC. RRC and PDCP are in the central unit. RLC, MAC, physical layer and RF are in the distributed unit.
Option 3 (intra RLC split):
   ∘ Low RLC (partial function of RLC), MAC, physical layer and RF are in the distributed unit. PDCP and high RLC (the other partial function of RLC) are in the central unit.
Option 4 (RLC-MAC split):
   ∘ MAC, physical layer and RF are in the distributed unit. PDCP and RLC are in the central unit.
Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC QoS flows;
∘ Comp. refers to header compression and Segm. To segmentation;
∘ Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC _CONNECTED state a UE may:
∘ store the AS context;
∘ transfer unicast data to/from the UE;
∘ monitor control channels associated with the shared data channel to determine if data is scheduled for the data channel;
∘ provide channel quality and feedback information;
∘ perform neighbouring cell measurements and measurement reporting.

The RRC protocol includes e.g. the following main functions:
∘ RRC connection control;
∘ measurement configuration and reporting;
∘ establishment/modification/release of measurement configuration (e.g. intra-frequency, inter-frequency and inter-RAT measurements);
∘ setup and release of measurement gaps;
∘ measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g., an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

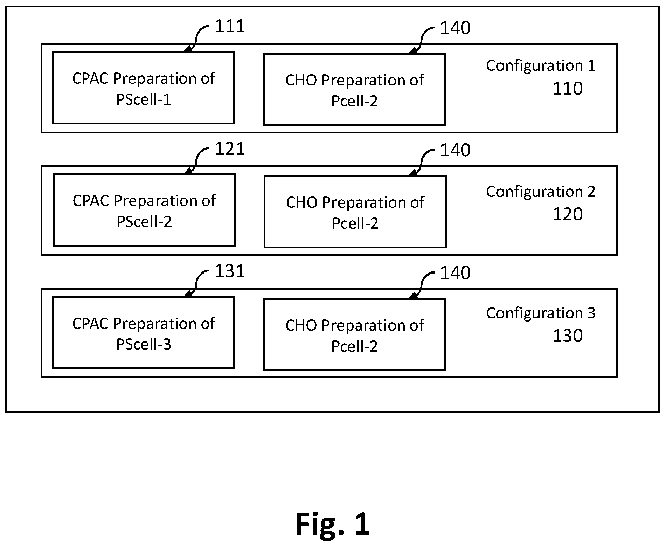

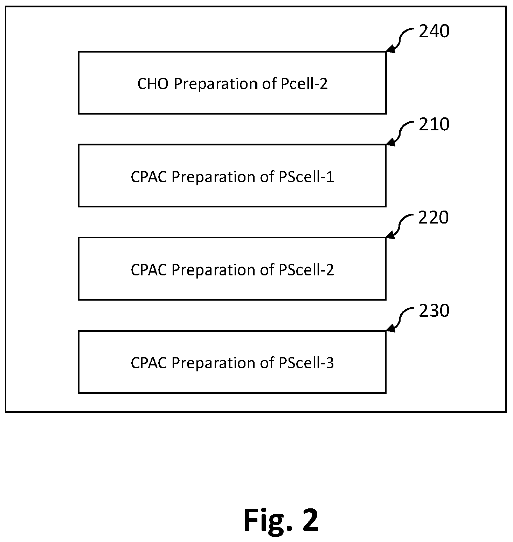

Before going into detail about the example embodiments of the present disclosure, it may still be worthwhile to, for example with reference to Figures 1 and 2, briefly go through some exemplary general aspects of Conditional Handover (CHO) related techniques that may be considered useful for understanding the present disclosure.

As briefly mentioned above, the CHO procedure has been introduced to improve mobility robustness. In particular, in the case of CHO, the network may prepare multiple target cells where each conditional handover reconfiguration is associated with a CHO execution condition that is evaluated by the UE. The CHO execution condition may refer to a measurement ID associating a measurement object with a reporting configuration and may be configured by source gNB. The reporting configuration may generally define the measurement event (e.g., A3 or A5) which may trigger the reporting of the configured measurements. The same measurement events may also be configured by the UE which would trigger the CHO execution upon the configured measurement configuration being met. Whenever a CHO execution condition is met, the corresponding target configuration is selected, and the handover is executed towards the selected target cell (e.g., a target PCell of a target MN). In short, the CHO procedure may generally be seen as being designed so that UE can execute the handover autonomously without the need for the serving cell to trigger the handover (HO) execution after receiving a measurement report from the UE.

Now, in the case of supporting CHO in a DC system setup/configuration (e.g., NR-DC), the target MN may generally provide CHO preparation for the PCell along with CPAC preparation for the PSCells. Accordingly, the UE may evaluate those CPAC conditions for all PSCells that are configured by the network.

Conventionally speaking, there may exist two potential options for configuring CHO for PCell with CPAC for target PSCells.

To be more specific, in option 1, there may be multiple CHO preparations for the same PCell, with each CHO preparation including a respective CPAC preparation (e.g., a different PSCell preparation). For instance, as schematically shown in Figure 1, configurations 1 to 3 (i.e., references 110, 120, 130) may all have respective CHO preparations of the same PCell (e.g., Pcell-2) 140; while on the other hand, each of the configurations 1 to 3, i.e., 110, 120, 130 may have a respective CPAC preparation 111, 121, 131 for a separate PSCell (e.g., PScell-1, PScell-2, PScell-3). Depending on various implementations and/or applications, these CPAC preparations 111, 121 and 131 may or may not be different.

In comparison, in option 2, there may be one CHO preparation for a PCell, including multiple CPAC preparations for different PSCells. For instance, as schematically shown in Figure 2, there may be a single CHO preparation 240 for example for Pcell-2, while at the same time, three separate (same or different) CPAC preparations 210, 220, 230 for example for PScell-1, PScell-2 and PScell-3, respectively.

As has been noted above, in the case that the CPAC execution condition evaluation starts after the CHO condition is met, considering first option 1 (Figure 1), if multiple CHO conditions (e.g., Pcell-2 access conditions) are met, the UE may start evaluating the CPAC conditions for multiple PSCells, i.e., the CPAC conditions that are configured with all these CHO conditions (or at least the CHO conditions that are same). On the other hand, considering option 2 (Figure 2), if a single CHO condition is met (e.g., Pcell-2 access condition), the UE may start evaluating all the CPAC conditions associated with this CHO condition. However, in either of the two options above, the UE would need to evaluate all the CPAC conditions that are associated with the PCell access that meets the CHO condition.

In some other possible cases where the CPAC execution condition evaluation may start independent of (or in other words, in parallel with) the CHO condition, the UE would again need to evaluate all CPAC conditions.

In summary, in any of the scenarios illustrated above, the UE would have to evaluate all of the CPAC conditions but might eventually execute the CPAC towards only one PSCell. The rest of the CPAC condition evaluations for other PSCells would then go in vain which may lead to higher UE processing and power consumption. Therefore, generally speaking, the present disclosure seeks to propose mechanisms/techniques for enabling the UE to start evaluating the CPAC execution conditions of the PSCells that are most likely to be executed (in other words, a shortlist of PSCells), thereby avoiding too much processing on the UE and in turn saving power consumption.

It may be worthwhile to mention that, although the term "CPAC condition" or the like may appear to have been used throughout the present disclosure, as will be understood and appreciated by the skilled person, such term may have a different or similar name, such as (but is certainly not limited to) PSCell condition, SCG condition, DC condition, or the like, depending on various implementations and/or circumstances. Regardless of the naming being used, it is to be noted that the main purpose here may be understood to indicate that the UE is generally configured to evaluate a cell to access as the primary cell or a special cell of the secondary cell group.

With the above in mind, in a broad sense, the present disclosure generally proposes to use suitable PCell beam measurements to minimize and avoid PSCell measurements for PSCell access conditions for CHO in the DC (e.g., NR-DC) use case. Generally speaking, the DC-CHO execution may typically be linked to two measurement IDs (identifiers) where one may be mapped to target PCell measurements and part of MCG measurement configuration; while the other condition may be mapped to target PSCell evaluation and part of SCG measurement configuration.

As will be discussed in more detail below, in some possible examples of the present disclosure, the measurements for evaluation of PSCell measurements may be determined based on additional conditions (or criteria) linked to the beams of the source and/or target PCell (e.g., whether a beam x is a serving beam). In some possible implementations, the additional condition may be included in the conditional reconfiguration (or the like) and may be introduced as a condition for triggering the evaluation of the CPAC condition and respective PSCell, but notably not for the execution of any CPAC procedure.

This newly proposed condition for optimizing the evaluation of PSCell may contain, but is certainly not limited thereto, some or all of the following exemplary criteria. Particularly, it is to be noted that, depending on various deployment configurations and/or applications, the condition may be given in terms of serving (source) PCell beam and/or target PCell beam measurements, or the like.

For instance, the exemplary condition/criteria may include: whether a suitable measurement measure (e.g., an RSRP (Reference Signal Received Power) measure or the like) of a beam x of the serving/source PCell (e.g., PCell 1) is larger than (or equal to) a predetermined/preconfigured threshold. If this is the case, then measurement of the corresponding target PSCell (e.g., target PSCell 1) associated with this beam x of PCell 1 may be activated.

As another possible example, the exemplary condition/criteria may include whether a PCell beam x has the largest (or strongest) measurement measure among a predetermined (or preconfigured) list of beams (e.g., including beams x, y, z), or in some possible cases, selecting the strongest beam among the predetermined or preconfigured beam list. For instance, in some possible implementations, PCell beam x may be considered the strongest if the RSRP measure (or the like) of PCell beam x is larger than the RSRP measure (or the like) of PCell beam y, and the RSRP measure (or the like) of PCell beam x is also larger than the RSRP measure (or the like) of PCell beam z (and similarly for all other beams, if any, indicated in the beam list). Accordingly, if beam x exhibits the strongest RSRP (or any other suitable measure), the measurement for the associated PSCell 1 (which is associated with beam x) may be activated. Similarly, if beam y is the strongest, the associated PSCell 2 measurement may be activated, while if beam z is strongest, the associated PSCell 3 measurement may be activated.

In some possible implementations, for example, also A3/A5 conditions (or the like) that may have been evaluated by the UE based on serving PCell beam measurements which determine the CPAC (PSCell) activation may also be (re-)used as an (alternative or additional) condition/criterion.

As noted above, the conditions/criteria illustrated above (with respect to source/serving PCell beam measurements) may likewise be formulated for target PCell beam measurements. In some possible implementations, the same (or similar) rules may also be extended or formulated for serving PSCell or SCell beam measurements (if there are any).

It may be worthwhile to mention that the above-illustrated conditions/criteria may be used separately (individually) or jointly, depending on various implementations and/or applications. For instance, in some possible cases, it may be possible to implement a kind of hierarchical criteria that may include for example first determining all beams that have an RSRP measurement (or the like) larger than a predefined threshold, and then selecting the strongest beam therefrom. Of course, as can be understood and appreciated by the skilled person, any other suitable implementations for the conditions/criteria may be considered and adopted as well, depending on various deployment circumstances.

Moreover, as can be understood and appreciated by the skilled person, the criteria for target PSCell measurement may need to be indicated to the UE by the network. For instance, depending on various implementations, the criteria for target PSCell using target PCell beam measurements may be indicated to the source MN by the target MN; while the criteria for target PSCell using source PSCell beam measurements may be indicated to the source MN by the source SN.

To summarize the above, in a broad sense, according to example embodiments of the present disclosure, for conditional reconfiguration with dual connectivity (namely the DC-CHO scenario), the UE may generally be configured with at least one additional condition for evaluation of the measurement-ID for PSCell measurements. The additional condition to optimize the evaluation of PSCells may for example be configured as a specific beam ID of source or target PCell beam (e.g., being the strongest beam and/or above a specific threshold, or the like, as illustrated above). In some possible implementations, such additional condition(s) for evaluation may be configured as another (e.g., predetermined or predefined) measurement ID for example within the measurement configuration of MCG and may be linked to the CHO execution conditions.

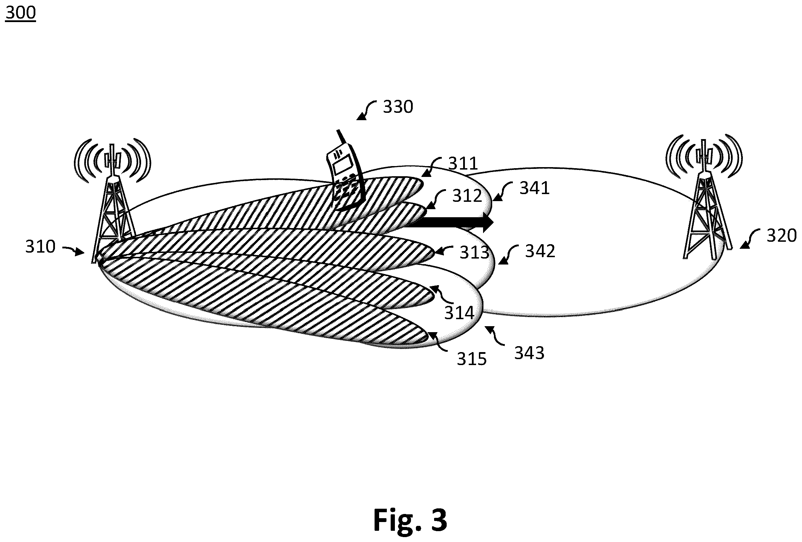

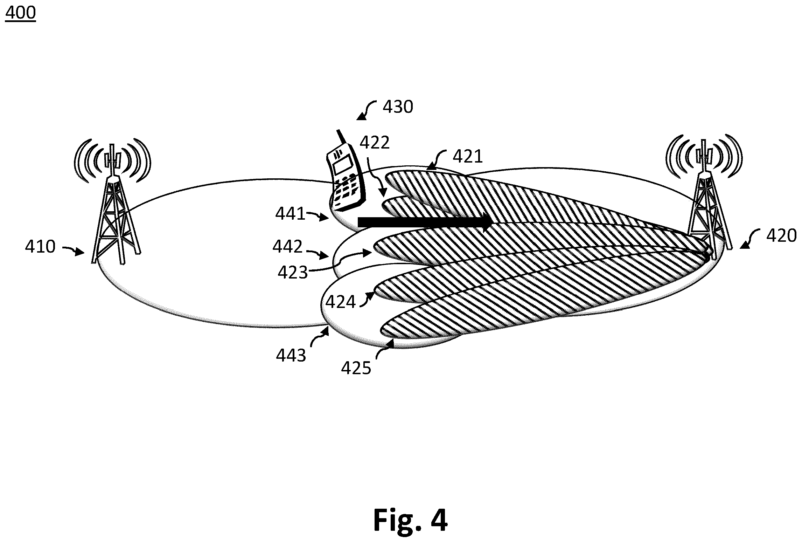

Reference is now made to Figures 3 and 4, which schematically and respectively illustrate a high-level example diagram illustrating an exemplary source (Figure 3) or target (Figure 4) PCell beam based implementation according to some example embodiments of the present disclosure. As mentioned above, identical or like reference numbers used in Figures 3 and 4 may, unless indicated otherwise, indicate identical or like elements, such that repeated description thereof may be omitted for reasons of conciseness.

In particular, Figure 3 schematically shows a high-level system setup 300, which exemplarily involves a source/serving PCell 310 (e.g., of a source MN or the like) serving a UE (e.g., a mobile terminal) 330 and a potential target PCell 320 (e.g., of a target MN or the like). Notably, the PCell may be configured with a number of (e.g., 5 in the present example) beams 311, 312, 313, 314 and 315. Particularly, in the present example of Figure 3, the UE 330 is currently served by beam 311 (in other words, beam 311 may be referred to as the serving beam). Furthermore, the target cell 320 may also comprise (be associated/configured with) a number of (e.g., 3 in the present example) target PSCells 341, 342 and 343 which may for example be deployed at the cell border.

Specifically, in the solution proposed in Figure 3, any suitable (e.g., existing or even new) measurements on the source PCell 310 may be used for facilitating the decision or selection from (or put differently, shortlisting) the list of target PSCells 341, 342 and 343 for evaluating corresponding CPAC conditions. For instance, in some possible implementations, existing SSB (Synchronization Signal Block) and/or CSI-RS (Channel State Information-Reference Signal) beam measurements (or the like) may be used for shortlisting the list of potential target PSCells for the evaluation. Depending on various implementations, the target PSCell(s) fulfilling or meeting the criteria or conditions as illustrated above (e.g., which may be visible on the strongest beam of the source PCell, or the like) may be chosen as the shortlisted PSCell(s) to subsequently perform the evaluation of the CPAC conditions. Accordingly, the rest of the PSCells CPAC conditions may not need to be evaluated by the UE. Proposed as such, particularly by shortlisting only a few of (e.g., one or more) PSCells in the target cell, the processing power of the UE may be saved, which in turn saves the overall power consumed by the UE.

Figure 4 schematically shows another high-level example system setup 400. Compared to Figure 3, the major difference lies in that it is now the target PCell beam based measurements (instead of the source PCell beam based solution as proposed in Figure 3) that are to be used to identify potential target PSCells.

To be more specific, in this example of Figure 4, any suitable (e.g., existing SSB or CSI-RS related) beam measurements on the target PCell 420 may be used for shortlisting the list of target PScells 441, 442, 443 for evaluating corresponding CPAC conditions. This time, the target PSCell(s) meeting or fulfilling the (predetermined) criteria/conditions (e.g., which may be visible on the strongest beam of the target PCell, or the like) are to be chosen as the shortlisted PSCell(s) to evaluate the CPAC conditions. Similarly, the rest of the PSCells CPAC conditions do not need to be evaluated by the UE. Again, by shortlisting only a few PSCells in the target cell, the processing power of the UE is saved, and in turn saves the overall power consumption of the UE.

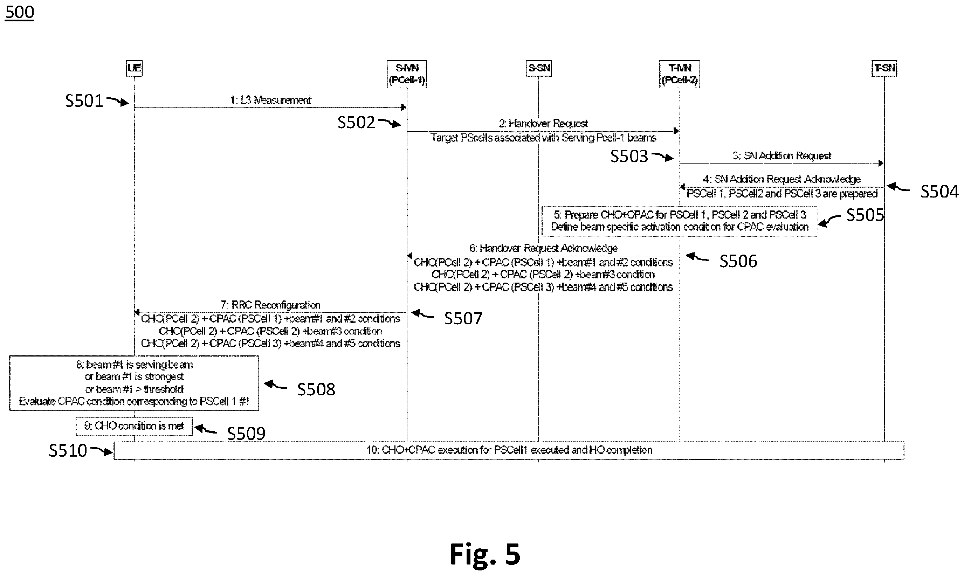

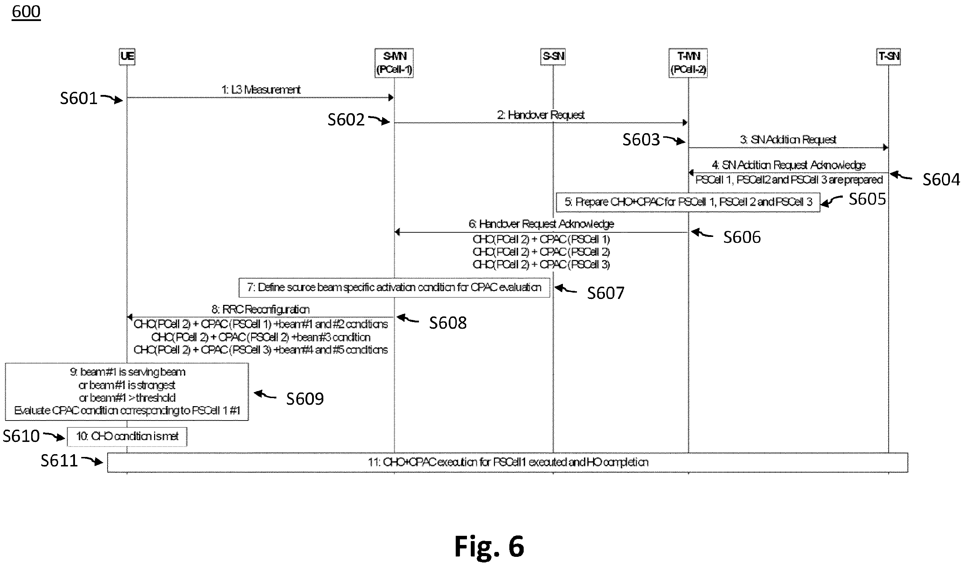

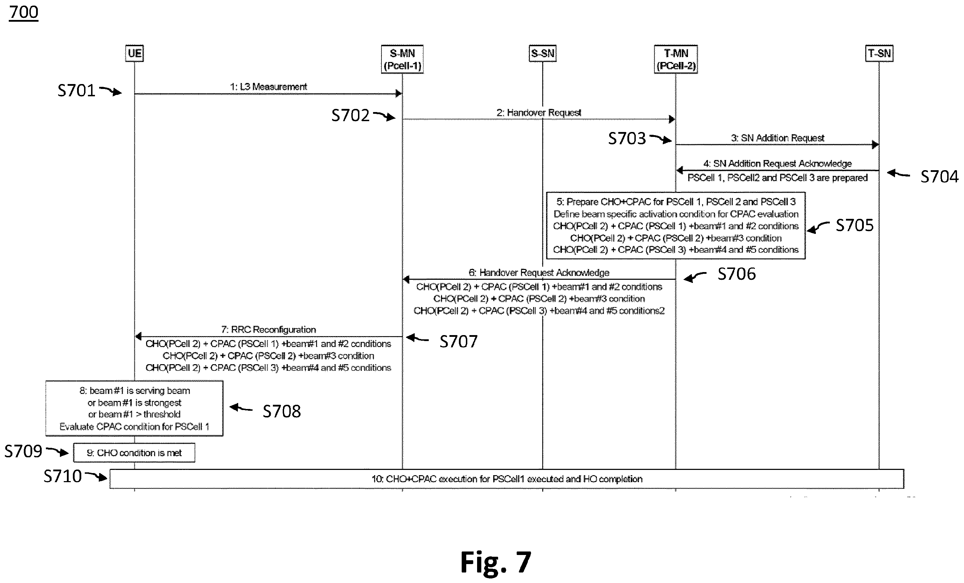

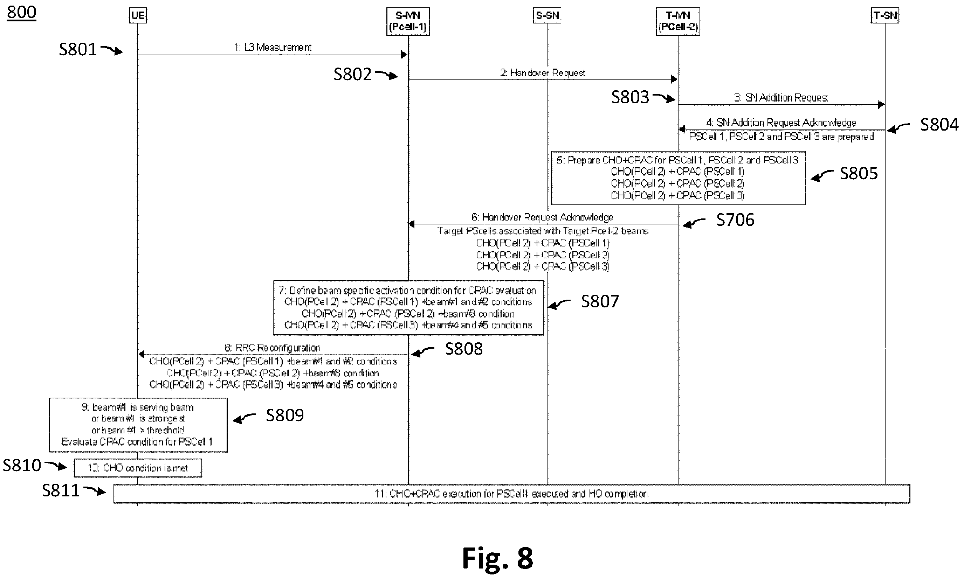

Now, the above-proposed techniques will be described in more detail with the help of the corresponding signaling/messaging flowcharts as schematically shown in Figures 5 to 8. Notably, therein, Figures 5 and 6 schematically illustrate two possible alternative implementations for the source PCell (associated with the source/serving MN) based solution; while on the other hand, Figures 7 and 8 schematically illustrate another two possible alternative implementations for the target PCell (associated with the target MN) based solution. In a broad sense, the distinction between the alternatives may be understood to lie in the answer to the question as to which network entity/node (namely, the target MN (or T-MN for short) or the source MN (or S-MN for short) would be configured to determine or decide on the criteria or conditions as illustrated above). Moreover, as noted above, identical or like reference numbers used in those figures may, unless indicated otherwise, indicate identical or like elements, such that repeated description thereof may be omitted for reasons of conciseness.

First, the example implementation 500 as shown in Figure 5 schematically illustrates the alternative where the target MN generates the source beam-specific activation and/or deactivation conditions according to some example embodiments of the present disclosure. However, it may be worth mentioning that, as may be understood and appreciated by the skilled person as well, this exemplary flow chart as shown in Figure 5 is merely one possible implementation according to some example embodiments of the present disclosure, but should not be understood to constitute a limitation of any kind.

In particular, in step S501, the UE may be configured to send a Measurement Report message (or the like) to the source MN (S-MN).

Accordingly, in step S502, the source MN may start a handover procedure for example by initiating a Handover Request message (or the like) to the target MN (T-MN). In some possible implementations, this message may include the mapping of target PSCells associated with serving/source PCell beams (or in some possible cases, also beams associated with for example source SCell as well as PSCell, or the like) to provide assistance information to the target MN for generating the corresponding CPAC evaluation activation conditions based on the source PCell beam measurements.

Then, the target MN may send, in step S503, an SN Addition Request (or the like) message to the target SN; and correspondingly, the target SN may be configured to send, in step S504, an SN Addition Request Acknowledge with the PSCells identified for the UE. Depending on various implementations, the target SN may include an indication of the full or delta (i.e., only the changed part thereof) version of the RRC configuration.

In step S505, the target MN may be configured to generate the respective CHO and CPAC RRC configurations. In particular, the target MN may define the source PCell beam specific activation (and/or deactivation) conditions for CPAC evaluation activation (and/or deactivation) as has been illustrated above in detail, and include the same in the RRC configuration.

Subsequently in step S506, the target MN may send a Handover Request Acknowledge message (or the like) to the source MN for example with an RRC Reconfiguration message (or the like) to be sent to the UE in order to perform the handover. As an illustrative example for ease of understanding, particularly with reference to the exemplary system setup 300 as shown in Figure 3, the following source PCell beam-specific CPAC measurement activation conditions may be included in the message, namely:
- a first set of configurations including CHO configuration for the target PCell (PCell 2), CPAC configuration for PSCell 1 as well as the corresponding CPAC activation condition, i.e., PCell 1 beam #1 and beam #2 conditions (since as illustratively shown in the example of Figure 3, both beams #1 (reference 311) and #2 (reference 312) appear to be associated with PSCell 1 (reference 341));
- a second set of configurations including CHO configuration for the target PCell (PCell 2), CPAC configuration for PSCell 2 as well as the corresponding CPAC activation condition, i.e., PCell 1 beam #3 condition; and
- a third set of configurations including CHO configuration for the target PCell (PCell 2), CPAC configuration for PSCell 3 as well as the corresponding CPAC activation condition, i.e., PCell 1 beam #4 and beam #5 conditions.

Upon receipt of such message, the source MN may, as exemplarily shown in step S507, send an RRC Reconfiguration message to the UE with the configuration received from the target MN. This message may include, among other possibilities, the CPAC evaluation activation conditions that have been prepared/generated by target MN above.

In step S508, the UE may determine, based on the conditions/criteria received from the source MN, whether any one or more target PSCells are associated with at least one source PCell beam that meets or fulfills such conditions/criteria. For instance, in some possible implementations, if beam #1 (e.g., beam 311 in Figure 3) meets the criteria that beam #1 is the serving beam and/or beam #1 is the strongest beam and/or RSRP measure of beam #1 is larger than a predetermined threshold, since PSCell 1 (e.g., PSCell 341 in Figure 3) is associated with beam #1, the UE may start evaluating CPAC conditions (only) for PSCell 1 (or in other words, CPAC evaluation for PSCell 1 is activated). As illustrated above in detail, any other suitable conditions/criteria may be adopted as well, depending on various implementations and/or applications.

Then, once CHO conditions are met (step S509), PSCell 1 would be the only PSCell that needs to be evaluated. Accordingly, as exemplarily shown in step S510, CHO and CPAC for PSCell 1 would be executed, such that the handover procedure could be successfully completed.

It may be worthwhile to mention that, in some possible implementations, the CPAC evaluation activation condition (step S509) may be independent of the CHO condition. In other words, the UE may start the evaluation of the CPAC activation conditions once they are received in step S508. Hence, the CPAC evaluation condition may be met before the CHO condition is met or at the same time when the CHO condition is met, depending on various circumstances.

As can be seen from the above-illustrated example, particularly by shortlisting only a few (e.g., one or more) of candidate target PSCells (e.g., only one PSCell 1 in the example of Figure 5) in the target PCell based on the predetermined or preconfigured at least one criterion, the UE may be enabled to evaluate only a limited (shortlisted) number of target PSCells for the CPAC conditions (instead of all PSCells in conventional techniques), thereby significantly improving the processing efficiency and at the same time also saving the power consumption of the UE.

Second, Figure 6 schematically illustrates the alternative implementation 600 where, in comparison with the example of Figure 5, it is now the source MN (instead of the target MN) that defines or generates the beam specific activation or deactivation conditions according to some example embodiments of the present disclosure.

In particular, in step S601, the UE may be configured to send a Measurement Report message to the source MN. Accordingly, in step S602, the source MN may be configured to start a handover procedure for example by initiating a Handover Request message to the target MN.

Then, the target MN may send, in step S603, an SN Addition Request message to the target SN; and correspondingly, the target SN may send, in step S604, an SN Addition Request Acknowledge message with the PSCells identified for the UE. Depending on various implementations, the target SN may include an indication of the full or delta (i.e., only the changed part thereof) RRC configuration.

Further, the target MN may be configured to, as exemplarily shown in step S605, generate the respective CHO and CPAC RRC configurations; and as exemplarily shown in step S606, the target MN may send a Handover Request Acknowledge message to the source MN for example with an RRC Reconfiguration message to be sent to the UE in order to perform the handover. Also using the exemplary system setup 300 of Figure 3 as an illustrative example, the following may be included in the message:
- a first set of configurations including CHO configuration for the target PCell (PCell 2) and CPAC configuration for PSCell 1;
- a second set of configurations including CHO configuration for the PCell 2 and CPAC configuration for PSCell 2; and
- a third set of configurations including CHO configuration for the target PCell 2 as well as CPAC configuration for PSCell 3.

Upon receipt of such message, the source MN may be configured to, as exemplarily shown in step S607, define or generate the corresponding source beam specific activation condition for CPAC evaluation; and as exemplarily shown in step S608, send an RRC Reconfiguration message to the UE with the configuration received from the target MN. This message may include, among other possibilities, the CPAC evaluation activation conditions that have been generated by the source MN (instead of generated by the target MN in the above example of Figure 5), namely:
- a first set of configurations including CHO configuration for the target PCell 2, CPAC configuration for PSCell 1 as well as the corresponding CPAC activation condition, i.e., similar to the above example of Figure 5, PCell 1 beam #1 and beam #2 conditions;
- a second set of configurations including CHO configuration for the target PCell 2, CPAC configuration for PSCell 2 as well as the corresponding CPAC activation condition, i.e., PCell 1 beam #3 condition; and
- a third set of configurations including CHO configuration for the target PCell 2, CPAC configuration for PSCell 3 as well as the corresponding CPAC activation condition, i.e., PCell 1 beam #4 and beam #5 conditions.

In step S609, the UE may determine, based on the conditions/criteria received from the source MN, whether any one or more target PSCells are associated with at least one source PCell beam that may meet or fulfill such conditions/criteria. For instance, in some possible implementations, if beam #1 (e.g., beam 311 in Figure 3) meets the criteria in that beam #1 is the serving beam and/or beam #1 is the strongest beam and/or RSRP measure of beam #1 is larger than a predetermined threshold, since PSCell 1 (e.g., PSCell 341 in Figure 3) is associated with such beam #1, the UE may start evaluating CPAC conditions (only) for PSCell 1 (or in other words, CPAC evaluation for PSCell 1 is activated).

Subsequent steps S610 and S611 correspond to steps S509 and S510 in Figure 5 respectively, so that repeated description thereof may be omitted for reasons of conciseness.

Next, reference is made to Figures 7 and 8, which schematically illustrate another proposal based on the target PCell (PCell 2) beam measurements to identify potential target PSCells (corresponding to the high-level example of Figure 4). Similar to the case as illustrated above with reference to Figures 5 and 6, there are also two alternatives here, where in a first alternative the T-MN generates the CPAC evaluation activation (or deactivation) conditions, whereas in a second alternative the S-MN generates the CPAC evaluation activation (or deactivation) conditions.

Specifically, starting with the first alternative 700, as shown in Figure 7, the UE may be configured to, in step S701, send a Measurement Report message to the source MN (S-MN). Accordingly, in step S702, the source MN may be configured to start a handover procedure for example by initiating a Handover Request message to the target MN.

Then, the target MN may send, in step S703, an SN Addition Request message to the target SN; and correspondingly, the target SN may send, in step S704, an SN Addition Request Acknowledge with the PSCells identified for the UE. Depending on various implementations, the target SN may include an indication of the full or delta (i.e., only the changed part thereof) RRC configuration.

In step S705, the target MN may be configured to prepare or generate the respective CHO and CPAC RRC configurations. In particular, the target MN may define the target PCell beam specific activation (and/or deactivation) conditions for CPAC evaluation activation (and/or deactivation) as have been illustrated above in detail, and include the same in the RRC configuration. Notably, the main difference between the example implementation of Figure 5 or 6 and the present implementation is that those conditions defined here are now based on target PCell beam measurements (rather than the source PCell beam based measurements in Figure 5 or 6).

Subsequently in step S706, the target MN may send a Handover Request Acknowledge message to the source MN for example with an RRC Reconfiguration message to be sent to the UE in order to perform the handover. As an illustrative example for ease of understanding, particularly with reference to the exemplary system setup 400 as shown in Figure 4, the following target PCell beam specific CPAC measurement activation conditions may be included in the message, namely:
- a first set of configurations including CHO configuration for the target PCell (PCell 2), CPAC configuration for PSCell 1 as well as the corresponding CPAC activation condition, i.e., PCell 2 beam #1 and beam #2 conditions (since as illustratively shown in the example of Figure 4, both beams #1 (reference 421) and #2 (reference 422) appear to be associated with PSCell 1 (reference 441));
- a second set of configurations including CHO configuration for PCell 2, CPAC configuration for PSCell 2 as well as the corresponding CPAC activation condition, i.e., PCell 2 beam #3 condition; and
- a third set of configurations including CHO configuration for PCell 2, CPAC configuration for PSCell 3 as well as the corresponding CPAC activation condition, i.e., PCell 2 beam #4 and beam #5 conditions.

Upon receipt of such message, the source MN may, as exemplarily shown in step S707, send an RRC Reconfiguration message to the UE with the configuration received from the target MN. This message may include, among other possibilities, the CPAC evaluation activation conditions that have been generated by target MN above.

In step S708, the UE may determine, based on the conditions/criteria received from the source MN, whether any one or more target PSCells are associated with at least one target PCell beam that meets or fulfills such conditions/criteria. For instance, in some possible implementations, if beam #1 (e.g., beam 421 in Figure 4) meets the criteria in that beam #1 is the serving beam and/or beam #1 is the strongest beam and/or RSRP measure (or the like) of beam #1 is larger than a predetermined threshold, since PSCell 1 (e.g., PSCell 441 in Figure 4) is associated with beam #1, the UE may start evaluating CPAC conditions (only) for PSCell 1 (or in other words, CPAC evaluation for PSCell 1 is activated). As illustrated above in detail, any other suitable conditions/criteria may be adopted as well, depending on various implementations and/or applications.

Subsequent steps S709 and S710 correspond to steps S509 and S510 in Figure 5, respectively, so that repeated description thereof may be omitted for reasons of conciseness.

On the other hand, in the alternative 800 of Figure 8, it is now the source MN (instead of the target MN in the example of Figure 7) that defines or generates the beam specific activation or deactivation conditions according to some example embodiments of the present disclosure.

In particular, in step S801, the UE may be configured to send a Measurement Report message (or the like) to the source MN. Accordingly, in step S802, the source MN may start a handover procedure for example by initiating a Handover Request message (or the like) to the target MN.

Then, the target MN may send, in step S803, an SN Addition Request message to the target SN; and correspondingly, the target SN may send, in step S804, an SN Addition Request Acknowledge message with the PSCells identified for the UE. Depending on various implementations, the target SN may include an indication of the full or delta (i.e., only the changed part thereof) RRC configuration.

Further, the target MN may be configured to, as exemplarily shown in step S805, generate the respective CHO and CPAC RRC configurations; and, as exemplarily shown in step S806, send a Handover Request Acknowledge message to the source MN for example with an RRC Reconfiguration message to be sent to the UE in order to perform the handover. Also using the exemplary system setup 400 of Figure 4 as an illustrative example, the following may be included in the message:
- a first set of configurations including CHO configuration for target PCell 2 and CPAC configuration for PSCell 1;
- a second set of configurations including CHO configuration for the PCell 2 and CPAC configuration for PSCell 2; and
- a third set of configurations including CHO configuration for the target PCell 2 as well as CPAC configuration for PSCell 3.

Notably, in this exemplary implementation, the CPAC measurement activation (and/or deactivation) conditions will not be generated and forwarded from the target MN to the source MN (as illustrated above in the first alternative of Figure 7). Instead, the target MN sends the mapping of target PSCells associated with target PCell beams to provide assistance information to the S-MN for generating the CPAC evaluation activation conditions based on target PCell beam measurements.

Upon receipt of such message including the CHO and CPAC preparation configurations, the source MN may be configured to, as exemplarily shown in step S807, define or generate corresponding target beam specific activation (and/or deactivation) conditions for CPAC evaluation activation (and/or deactivation) based on target PCell beam measurements; and as exemplarily shown in step S808, send an RRC Reconfiguration message to the UE with the configuration received from the target MN. This message may include, among other possibilities, the CPAC evaluation activation conditions that have been generated by the source MN (instead of the target MN in the above example of Figure 7).

In step S809, the UE may determine, based on the conditions/criteria received from the source MN, whether any one or more target PSCells are associated with at least one target PCell beam that meets or fulfills such conditions/criteria. For instance, in some possible implementations, if beam #1 (e.g., beam 421 in Figure 4) meets the criteria in that beam #1 is the serving beam and/or beam #1 is the strongest beam and/or RSRP measure of beam #1 is larger than a predetermined threshold, since PSCell 1 (e.g., PSCell 441 in Figure 4) is associated with beam #1, the UE may start evaluating CPAC conditions (only) for PSCell 1 (or in other words, CPAC evaluation for PSCell 1 is activated).

Subsequent steps S809, S810 and S811 correspond to steps S609, S610 and S611 in Figure 6 respectively, so that repeated description thereof may be omitted for reasons of conciseness.

As has been noted above, by shortlisting only a few (e.g., one or more) of candidate target PSCells in the target PCell based on the predetermined or preconfigured criteria, the UE may be enabled to evaluate a limited (shortlisted) number of target PSCells for the CPAC conditions, thereby significantly improving the processing efficiency and at the same time also saving the power consumption of the UE. Moreover, the measurements used by the techniques proposed in the present disclosure are all existing ones (i.e., no new measurement mechanism per se being introduced), so there would generally be no UE compatibility issue with the proposed techniques.

For the sake of completeness, it is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person. It is also to be noted that, although some of the example embodiments above may appear to be described with respect to activation of the measurement for PSCells, analogous or similar descriptions are also applicable to the case of deactivation of the measurement for PSCells (or any other suitable use cases), as may be understood and appreciated by the skilled person.

According to some example embodiments, there are also provided corresponding methods suitable to be carried out by the apparatuses (network elements/nodes/components) as described above, such as the UE, the source and target network elements (e.g., gNB, MN, SN, etc.).

It should also be noted that the apparatus (or system) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the source/target gNB, MN, SN, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

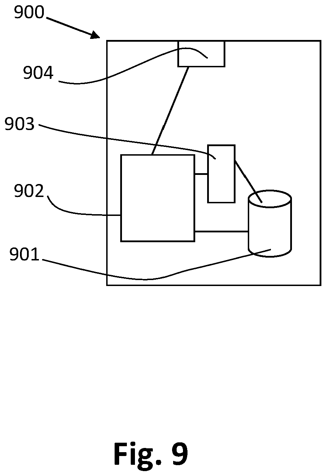

An illustrative (non-limiting) example for such an apparatus 900 is schematically shown in Figure 9. The apparatus 900 may be configured to implement a UE, a serving/source network node (e.g., source MN), or a target network node (e.g., target MN) as proposed in the present disclosure. In some possible cases, the apparatus 900 may also be implemented as any suitable network node/component/element for a communications system, for example, to be coupled to and/or for controlling a station of an access system, such as a RAN node, e.g. a base station, eNB or gNB, a relay node or a core network node such as an MME or S-GW or P-GW, or a core network function such as AMF, SMF, LMF, a server or host, or in some possible implementations, a UE. Depending on various implementations, the method as described in the present disclosure may be implemented in a single apparatus or across more than one apparatus. The apparatus may be integrated with or external to a node or module of a core network, RAN, or the like. In particular, the apparatus 900 may be arranged to provide control of communications in the service area of the system. The apparatus 900 may comprise at least one memory 901, at least one data processing unit (or circuitry) 902, 903, and an input/output interface 904. Via interface 904 the apparatus 900 may be coupled to any other suitable component (e.g., a receiver and/or a transmitter) of the apparatus 900, or to any other suitable other apparatus(es). In some possible examples, the receiver and/or the transmitter may be implemented as a radio front end or a remote radio head, depending on various implementations and/or circumstances.

Yet in some other example embodiments, there is provided a respective apparatus (e.g., implementing the UE, the network node, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

Enumerated example embodiments ("EEEs") of the present disclosure have been described above in relation to methods and systems for determining an indication of an audio quality of an audio input. Thus, an embodiment of the present invention may relate to one or more of the examples, enumerated below:
EEE 1. A source network element configured for supporting a conditional mobility procedure in a dual connectivity, DC, setup involving at least one target network element and a user equipment, UE, served by a first primary cell, PCell, of the source network element, the target network element being associated with a second PCell and a plurality of primary secondary cells, PSCells, for supporting a conditional PSCell addition and change, CPAC, procedure, and the source network element comprising:
   at least one processor; and
   at least one memory storing instructions that, when executed by the at least one processor, cause the source network element at least to:
      receive, from the target network element, respective CPAC condition configurations for the plurality of PSCells;
      obtain condition information indicative of at least one criterion for one or more beams associated with respective PSCells, wherein the at least one criterion is for facilitating determination of at least one PSCell that is associated with a beam fulfilling the criterion from the plurality of PSCells; and
      transmit the CPAC condition configurations and the condition information indicative of the criterion to the UE for evaluation of the respective CPAC condition of the at least one PSCell.
EEE 2. The source network element according to EEE 1, wherein the one or more beams are associated with the first PCell of the source network element, the second PCell of the target network element, and/or a PSCell associated with the source network element.
EEE 3. The source network element according to EEE 1 or 2, wherein the source network element being caused to obtain the condition information indicative of the at least one criterion involves:
   receiving, from the target network element, the condition information indicative of the at least one criterion.
EEE 4. The source network element according to EEE 3, wherein the condition information indicative of the at least one criterion is received from the target network element in a handover request acknowledgment message.
EEE 5. The source network element according to EEE 1 or 2, wherein the source network element being caused to obtain the condition information indicative of the at least one criterion involves:
   determining, by the source network element, the condition information indicative of the at least one criterion.
EEE 6. The source network element according to EEE 3 or 4, wherein
   the one or more beams are associated with the first PCell; and
   the source network element is further caused to, before receiving the condition information indicative of the at least one criterion from the target network element:
      transmit, to the target network element, information indicative of mapping of the plurality of PSCells of the target network element associated with the one or more beams of the first PCell.
EEE 7. The source network element according to EEE 6, wherein the information indicative of the mapping of the plurality of PSCells of the target network element associated with the one or more beams of the first PCell is transmitted in a handover request message.
EEE 8. The source network element according to EEE 5, wherein
   the one or more beams are associated with the second PCell;
   the source network element is further caused to, before determining the condition information indicative of the at least one criterion:
      receive, from the target network element, information indicative of mapping of the plurality of PSCells of the target network element associated with the one or more beams of the second PCell; and
   the condition information indicative of the at least one criterion is determined by the source network element based on the received information indicative of the mapping of the plurality of PSCells of the target network element associated with the one or more beams of the second PCell.
EEE 9. The source network element according to EEE 8, wherein the information indicative of the mapping of the plurality of PSCells of the target network element associated with the one or more beams of the second PCell is received from the target network element in a handover request acknowledgment message.
EEE 10. The source network element according to any one of the preceding EEEs, wherein the condition information indicative of the at least one criterion is transmitted to the UE in a radio resource control, RRC, reconfiguration message.
EEE 11. The source network element according to any one of the preceding EEEs, wherein the at least one criterion comprises at least one of:
   whether a beam is a serving beam,
   whether a measurement measure of a beam is larger than a predetermined threshold, or
   whether a beam has the largest measurement measure among a predetermined list of beams.
EEE 12. The source network element according to any one of the preceding EEEs, wherein the condition information indicative of the at least one criterion is configured to be associated with a predetermined measurement identifier.
EEE 13. The source network element according to any one of the preceding EEEs, wherein the source network element is further caused to:
   receive, from the target network element, a conditional handover, CHO, configuration for the second PCell; and
   transmit the CHO configuration to the UE for evaluation and execution of the conditional mobility procedure.
EEE 14. A target network element configured for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the target network element comprising:
   at least one processor; and
   at least one memory storing instructions that, when executed by the at least one processor, cause the target network element at least to:
      determine condition information indicative of at least one criterion for one or more beams associated with respective PSCells, wherein the at least one criterion is for facilitating determination of at least one PSCell that is associated with a beam fulfilling the criterion from the plurality of PSCells; and
      transmit the condition information indicative of the at least one criterion and respective CPAC condition configurations for the plurality of PSCells to the source network element.
EEE 15. The target network element according to EEE 14, wherein
   the one or more beams are associated with the first PCell;
   the target network element is further caused to, before determining the condition information indicative of the at least one criterion:
      receive, from the source network element, information indicative of mapping of the plurality of PSCells of the target network element associated with the one or more beams of the first PCell; and
   the condition information indicative of the at least one criterion is determined by the target network element based on the received information indicative of the mapping of the plurality of PSCells of the target network element associated with the one or more beams of the first PCell.
EEE 16. The target network element according to EEE 15, wherein the information indicative of mapping of the plurality of PSCells of the target network element associated with the one or more beams of the first PCell is received from the source network node in a handover request message.
EEE 17. The target network element according to any one of EEEs 14 to 16, wherein the condition information indicative of the at least one criterion is transmitted to the source network element in a handover request acknowledgment message.
EEE 18. A target network element configured for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the target network element comprising:
   at least one processor; and
   at least one memory storing instructions that, when executed by the at least one processor, cause the target network element at least to:
      transmit, to the source network element, information indicative of mapping of the plurality of PSCells of the target network element associated with the one or more beams of the second PCell, for enabling the source network element to determine condition information indicative of at least one criterion for one or more beams associated with respective PSCells, wherein the at least one criterion is for facilitating determination of at least one PSCells that is associated with a beam fulfilling the criterion from the plurality of PSCells.
EEE 19. The target network element according to EEE 18, wherein the information indicative of the mapping of the plurality of PSCells of the target network element associated with the one or more beams of the second PCell is transmitted to the source network element in a handover request acknowledgment message.
EEE 20. The target network element according to any one of EEEs 14 to 19, wherein the target network node is further caused to:
   transmit, to the source network element, a conditional handover, CHO, configuration for the second PCell.
EEE 21. The target network element according to any one of EEEs 14 to 20, wherein the condition information indicative of the at least one criterion is configured to be associated with a predetermined measurement identifier.
EEE 22. A user equipment, UE, configured for supporting a conditional mobility procedure in a dual connectivity, DC, setup involving a source network element and at least one target network element, the source network element being associated with a first primary cell, PCell, serving the UE, the target network element being associated with a second PCell and a plurality of primary secondary cells, PSCells, for supporting a conditional PSCell addition and change, CPAC, procedure, and the UE comprising:
   at least one processor; and
   at least one memory storing instructions that, when executed by the at least one processor, cause the UE at least to:
      receive, from the source network element, respective CPAC condition configurations for the plurality of PSCells and condition information indicative of at least one criterion for one or more beams associated with respective PSCells;
      determine, based on received condition information, at least one PSCell associated with a beam that fulfills the criterion; and
      evaluate the respective CPAC condition of the determined at least one PSCell.
EEE 23. The UE according to EEE 22, wherein the condition information indicative of the at least one criterion is received from the source network element in a radio resource control, RRC, reconfiguration message.
EEE 24. The UE according to EEE 22 or 23, wherein the UE is further caused to:
   receive, from the source network element, a conditional handover, CHO, configuration for the second PCell; and
   evaluate, based on the received CHO configuration, for executing the conditional mobility procedure.
EEE 25. A method of a source network element for supporting a conditional mobility procedure in a dual connectivity, DC, setup involving at least one target network element and a user equipment, UE, served by a first primary cell, PCell, of the source network element, the target network element being associated with a second PCell and a plurality of primary secondary cells, PSCells, for supporting a conditional PSCell addition and change, CPAC, procedure, and the method comprising:
   receiving, from the target network element, respective CPAC condition configurations for the plurality of PSCells;
   obtaining condition information indicative of at least one criterion for one or more beams associated with respective PSCells, wherein the at least one criterion is for facilitating determination of at least one PSCell that is associated with a beam fulfilling the criterion from the plurality of PSCells; and
   transmitting the CPAC condition configurations and the condition information indicative of the criterion to the UE for evaluation of the respective CPAC condition of the at least one PSCell.
EEE 26. A method of a target network element for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the method comprising:
   determining condition information indicative of at least one criterion for one or more beams associated with respective PSCells, wherein the at least one criterion is for facilitating determination of at least one PSCell that is associated with a beam fulfilling the criterion from the plurality of PSCells; and
   transmitting the condition information indicative of the criterion and respective CPAC condition configurations for the plurality of PSCells to the source network element.
EEE 27. A method of a target network element for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the method comprising:
   transmitting, to the source network element, information indicative of mapping of the plurality of PSCells of the target network element associated with the one or more beams of the second PCell, for enabling the source network element to determine condition information indicative of at least one criterion for one or more beams associated with respective PSCells, wherein the at least one criterion is for facilitating determination of at least one PSCells that is associated with a beam fulfilling the criterion from the plurality of PSCells.
EEE 28. A method of a user equipment, UE, configured for supporting a conditional mobility procedure in a dual connectivity, DC, setup involving a source network element and at least one target network element, the source network element being associated with a first primary cell, PCell, serving the UE, the target network element being associated with a second PCell and a plurality of primary secondary cells, PSCells, for supporting a conditional PSCell addition and change, CPAC, procedure, and the method comprising:
   receiving, from the source network element, respective CPAC condition configurations for the plurality of PSCells and condition information indicative of at least one criterion for one or more beams associated with respective PSCells;
   determining, based on received condition information, at least one PSCell associated with a beam that fulfills the criterion; and
   evaluating the respective CPAC condition of the determined at least one PSCell.
EEE 29. A computer program comprising instructions for causing an apparatus to perform the method according to any one of EEEs 25 to 28.
EEE 30. A memory storing computer readable instructions for causing an apparatus to perform the method according to any one of EEEs 25 to 28.

## Claims

1. A source network element configured for supporting a conditional mobility procedure in a dual connectivity, DC, setup involving at least one target network element and a user equipment, UE, served by a first primary cell, PCell, of the source network element, the target network element being associated with a second PCell and a plurality of primary secondary cells, PSCells, for supporting a conditional PSCell addition and change, CPAC, procedure, and the source network element comprising:
at least one processor; and
at least one memory storing instructions that, when executed by the at least one processor,
cause the source network element at least to:
receive, from the target network element, respective CPAC condition configurations for the plurality of PSCells;
obtain condition information indicative of at least one criterion for one or more beams associated with respective PSCells, wherein the at least one criterion is for facilitating determination of at least one PSCell that is associated with a beam fulfilling the criterion from the plurality of PSCells; and
transmit the CPAC condition configurations and the condition information indicative of the criterion to the UE for evaluation of the respective CPAC condition of the at least one PSCell.

2. The source network element according to claim 1, wherein the source network element being caused to obtain the condition information indicative of the at least one criterion involves:
receiving, from the target network element, the condition information indicative of the at least one criterion.

3. The source network element according to claim 1, wherein the source network element being caused to obtain the condition information indicative of the at least one criterion involves:
determining, by the source network element, the condition information indicative of the at least one criterion.

4. The source network element according to claim 2, wherein
the one or more beams are associated with the first PCell; and
the source network element is further caused to, before receiving the condition information indicative of the at least one criterion from the target network element:
transmit, to the target network element, information indicative of mapping of the plurality of PSCells of the target network element associated with the one or more beams of the first PCell.

5. The source network element according to claim 3, wherein
the one or more beams are associated with the second PCell;
the source network element is further caused to, before determining the condition information indicative of the at least one criterion:
receive, from the target network element, information indicative of mapping of the plurality of PSCells of the target network element associated with the one or more beams of the second PCell; and
the condition information indicative of the at least one criterion is determined by the source network element based on the received information indicative of the mapping of the plurality of PSCells of the target network element associated with the one or more beams of the second PCell.

6. The source network element according to any one of the preceding claims, wherein the at least one criterion comprises at least one of:
whether a beam is a serving beam,
whether a measurement measure of a beam is larger than a predetermined threshold, or
whether a beam has the largest measurement measure among a predetermined list of beams.

7. A target network element configured for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the target network element comprising:
at least one processor; and
at least one memory storing instructions that, when executed by the at least one processor, cause the target network element at least to:
determine condition information indicative of at least one criterion for one or more beams associated with respective PSCells, wherein the at least one criterion is for facilitating determination of at least one PSCell that is associated with a beam fulfilling the criterion from the plurality of PSCells; and
transmit the condition information indicative of the at least one criterion and respective CPAC condition configurations for the plurality of PSCells to the source network element.

8. The target network element according to claim 7, wherein
the one or more beams are associated with the first PCell;
the target network element is further caused to, before determining the condition information indicative of the at least one criterion:
receive, from the source network element, information indicative of mapping of the plurality of PSCells of the target network element associated with the one or more beams of the first PCell; and
the condition information indicative of the at least one criterion is determined by the target network element based on the received information indicative of the mapping of the plurality of PSCells of the target network element associated with the one or more beams of the first PCell.

9. A target network element configured for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the target network element comprising:
at least one processor; and
at least one memory storing instructions that, when executed by the at least one processor, cause the target network element at least to:
transmit, to the source network element, information indicative of mapping of the plurality of PSCells of the target network element associated with the one or more beams of the second PCell, for enabling the source network element to determine condition information indicative of at least one criterion for one or more beams associated with respective PSCells, wherein the at least one criterion is for facilitating determination of at least one PSCells that is associated with a beam fulfilling the criterion from the plurality of PSCells.

10. A user equipment, UE, configured for supporting a conditional mobility procedure in a dual connectivity, DC, setup involving a source network element and at least one target network element, the source network element being associated with a first primary cell, PCell, serving the UE, the target network element being associated with a second PCell and a plurality of primary secondary cells, PSCells, for supporting a conditional PSCell addition and change, CPAC, procedure, and the UE comprising:
at least one processor; and
at least one memory storing instructions that, when executed by the at least one processor, cause the UE at least to:
receive, from the source network element, respective CPAC condition configurations for the plurality of PSCells and condition information indicative of at least one criterion for one or more beams associated with respective PSCells;
determine, based on received condition information, at least one PSCell associated with a beam that fulfills the criterion; and
evaluate the respective CPAC condition of the determined at least one PSCell.

11. The UE according to claim 10, wherein the UE is further caused to:
receive, from the source network element, a conditional handover, CHO, configuration for the second PCell; and
evaluate, based on the received CHO configuration, for executing the conditional mobility procedure.

12. A method of a source network element for supporting a conditional mobility procedure in a dual connectivity, DC, setup involving at least one target network element and a user equipment, UE, served by a first primary cell, PCell, of the source network element, the target network element being associated with a second PCell and a plurality of primary secondary cells, PSCells, for supporting a conditional PSCell addition and change, CPAC, procedure, and the method comprising:
receiving, from the target network element, respective CPAC condition configurations for the plurality of PSCells;
obtaining condition information indicative of at least one criterion for one or more beams associated with respective PSCells, wherein the at least one criterion is for facilitating determination of at least one PSCell that is associated with a beam fulfilling the criterion from the plurality of PSCells; and
transmitting the CPAC condition configurations and the condition information indicative of the criterion to the UE for evaluation of the respective CPAC condition of the at least one PSCell.

13. A method of a target network element for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the method comprising:
determining condition information indicative of at least one criterion for one or more beams associated with respective PSCells, wherein the at least one criterion is for facilitating determination of at least one PSCell that is associated with a beam fulfilling the criterion from the plurality of PSCells; and
transmitting the condition information indicative of the criterion and respective CPAC condition configurations for the plurality of PSCells to the source network element.

14. A method of a target network element for supporting a conditional mobility procedure in a dual connectivity, DC, setup involving a user equipment, UE, served by a first primary cell, PCell, of a source network element, the target network element being associated with a second PCell and a plurality of primary secondary cells, PSCells, for supporting a conditional PSCell addition and change, CPAC, procedure, and the method comprising:
transmitting, to the source network element, information indicative of mapping of the plurality of PSCells of the target network element associated with the one or more beams of the second PCell, for enabling the source network element to determine condition information indicative of at least one criterion for one or more beams associated with respective PSCells, wherein the at least one criterion is for facilitating determination of at least one PSCells that is associated with a beam fulfilling the criterion from the plurality of PSCells.

15. A method of a user equipment, UE, configured for supporting a conditional mobility procedure in a dual connectivity, DC, setup involving a source network element and at least one target network element, the source network element being associated with a first primary cell, PCell, serving the UE, the target network element being associated with a second PCell and a plurality of primary secondary cells, PSCells, for supporting a conditional PSCell addition and change, CPAC, procedure, and the method comprising:
receiving, from the source network element, respective CPAC condition configurations for the plurality of PSCells and condition information indicative of at least one criterion for one or more beams associated with respective PSCells;
determining, based on received condition information, at least one PSCell associated with a beam that fulfills the criterion; and
evaluating the respective CPAC condition of the determined at least one PSCell.
